Europäisches Patentamt

European Patent Office

Office européen des brevets

(19)

(11) Publication number: **0 459 648 A1**

(12) **EUROPEAN PATENT APPLICATION**

(21) Application number: **91304246.1**

(22) Date of filing: **10.05.91**

(51) Int. Cl.⁵: **G01V 5/00, G01N 23/083**

(30) Priority: **31.05.90 US 530870**

(43) Date of publication of application:
**04.12.91 Bulletin 91/49**

(84) Designated Contracting States:
**AT BE CH DE DK ES FR GB GR IT LI LU NL SE**

(71) Applicant: **GAMMA-METRICS**
**5788 Pacific Center Blvd.**
**San Diego California 92121 (US)**

(72) Inventor: **Hurwitz, Michael Jack**
**10215 Saunders Road**
**San Diego, California 92131 (US)**
Inventor: **Tran, Kim Chinh**
**1163 Calle Paracho**
**San Diego, California 92128 (US)**
Inventor: **Atwell, Thomas L.**
**13055 Via Esperia**
**Del Mar, California 92014 (US)**
Inventor: **Conwell, Richard L.**
**13684 Boquita Drive**
**Del Mar, California 92014 (US)**

(74) Representative: **Blatchford, William Michael et al**
**Withers & Rogers 4 Dyer's Buildings Holborn**
**London EC1N 2JT (GB)**

(54) **Substance detection system.**

(57)    A system for detecting the presence of a given substance, such as an explosive or a narcotic substance, within a monitored object (16), such as luggage, includes an X-ray scanning system (10); a prompt gamma neutron activation analysis (PGNAA) scanning system (12); a conveyor (14) for transporting a monitored object through the X-ray scanning system and the PGNAA scanning system. The X-ray scanning system provides X-ray data signals (26) in response to X-ray scanning of the transported monitored object. The neutron analysis scanning system provides neutron analysis data signals (28) in response to PGNAA scanning of the transported monitored object. A data processing system (30, 32) processes the X-ray data signals and/or the neutron analysis data signals to provide an indication as to whether the transported monitored object contains at least a predetermined amount of a given substance. Both the X-ray scanning system and the PGNAA scanning system are contained within a common housing (18) having common radiation shielding material (20) positioned for shielding persons and objects outside the housing from both X-rays and radiation generated by the neutron analysis scanning system. The data processing system generates discriminants from the X-ray data signals and the neutron analysis data signals and conditions a neural network with the discriminants so that X-ray data signals and the neutron analysis data signals for monitored objects having unknown contents can be processed in accordance with the neural network to determine whether at least a predetermined amount of the given substance is contained within the monitored object.

EP 0 459 648 A1

FIG. 1

## BACKGROUND OF THE INVENTION

The present invention generally pertains to systems for detecting the presence of a given substance, such as an explosive or a narcotic, within a monitored object, and is particularly directed to object detection systems that include X-ray scanning systems and neutron analysis scanning systems.

X-ray scanning systems have long been used for detecting the presence of various devices within a monitored object. Typically X-ray data signals provided by scanning the monitored object with X-rays are processed to provide an image of the contents of the monitored object. The image indicates the mass density of the contents in different regions of the monitored object. A system for scanning an X-ray image of a monitored object; for providing signals indicative of the intensity of the image at any particular point; and for processing the signals to apply pattern recognition techniques to the image for the purpose of detecting the presence of an explosive device in monitored mail is described in International Patent Application Publication No. WO 83/00972, published March 17, 1983. An X-ray scanning system is contained in a housing that includes shielding material for shielding persons and objects outside the housing from the X-rays.

Neutron analysis scanning systems have also been used for detecting the presence of various substances within a monitored object. The use of thermal neutron analysis (TNA) scanning systems to detect explosives in monitored objects such as luggage is described in United States Patent No. 3,832,545 to John Bartko and in European Patent Application Publication No. 0295429A2, published December 21, 1988. In these systems, the monitored object is transported on a conveyor belt through a TNA system, which scans the monitored object to provide TNA data signals; and the TNA signals are processed by a computer to provide constituent density signals indicating the density of Nitrogen in the monitored object. Nitrogen is a principal constituent element of explosive substances that have been planted by terrorists in luggage, mail and other parcels. A neutron analysis scanning system is contained in a housing that includes shielding material for shielding persons and objects outside the housing from radiation generated by the neutron analysis scanning system.

## SUMMARY OF THE INVENTION

The present invention provides a system for detecting the presence of a given substance within a monitored object, comprising an X-ray scanning system; a neutron analysis scanning system; means for transporting a monitored object through the X-ray scanning system and the neutron analysis scanning system; wherein the X-ray scanning system is adapted for scanning said transported monitored object with X-rays and for providing X-ray data signals in response to said X-ray scanning of said transported monitored object; wherein the neutron analysis scanning system is adapted for scanning said transported monitored object with neutrons and for providing neutron analysis data signals in response to said neutron analysis scanning of said transported monitored object; a data processing system for processing the X-ray data signals for said transported monitored object and/or the neutron analysis data signals for said transported monitored object to provide an indication as to whether said transported monitored object contains at least a predetermined amount of a given substance; and a common housing for both the X-ray scanning system and the neutron analysis scanning system, with the housing having common radiation shielding material positioned for shielding persons and objects outside of the housing from both X-rays and radiation generated by the neutron analysis scanning system. Such a housing decreases the construction costs of the system and also reduces the overall size of the system.

It is also preferred that the neutron analysis scanning system be a prompt gamma neutron activation analysis (PGNAA) scanning system.

It is preferable that the transporting means be adapted for transporting said monitored object through the X-ray scanning system prior to transporting said monitored object through the neutron analysis scanning system because it is more likely that processing of the X-ray data signals will take more time than the processing of the neutron analysis data signals. The processing system can continue to process the X-ray data signals during the time that the monitored object is being transported to the neutron analysis scanning system so that the results of such processing are available when the results of processing the neutron analysis data signals are available for processing in combination therewith.

Accordingly the data processing system may include means for adjusting the processing of the neutron analysis signals in accordance with said X-ray data signals provided by the X-ray scanning system for said given object.

Also, the neutron analysis scanning system may be adjusted when scanning a given object in accordance with said X-ray data signals provided by the X-ray scanning system for said given object.

It also is preferable that the housing include a wall of shielding material between the X-ray scanning system and the neutron analysis scanning system for shielding the X-ray scanning system from the neutron analysis scanning system during said scanning; wherein the wall contains a door that is openable for permitting objects transported by the transporting means to be transported between the X-ray scanning system and the neutron analysis scanning system. In this embodiment, the system preferably includes means for detecting when a said object being transported by the transporting means approaches the door; and means for opening the door in response to detection said approach of said transported object so that the orientation of the object is not changed by contact with the door.

It further is preferable that the system include means for sensing a profile of said object as said object is being transported by said transporting means and for providing object profile signals in response thereto as said object is being transported. The system may include means for controlling the degree to which the door is opened in accordance with said object profile signals. The system may also include means for correlating the processing of said X-ray data signals and the processing of said neutron analysis data signals in accordance with said object profile signals. The system may further include means for means for timing the activation of the X-ray scanning means in accordance with said object profile signals.

In another aspect, the present invention provides a system for detecting the presence of a given substance within a monitored object, comprising an X-ray scanning system; a neutron analysis scanning system; means for transporting a monitored object through the X-ray scanning system and the neutron analysis scanning system; wherein the X-ray scanning system is adapted for scanning said transported monitored object with X-rays and for providing X-ray data signals in response to said X-ray scanning of said transported monitored object; wherein the neutron analysis scanning system is adapted for scanning said transported monitored object with neutrons and for providing neutron analysis data signals in response to said neutron analysis scanning of said transported monitored object; and a data processing system for processing the X-ray data signals for said transported monitored object and the neutron analysis data signals for said transported monitored object to provide an indication as to whether said transported monitored object contains at least a predetermined amount of a given substance, wherein the data processor is adapted for performing the following data processing routines:

(a) processing the X-ray data signals to determine a mass density distribution within different regions of said monitored object and to provide mass density signals indicating said determined mass density distribution within said different regions;

(b) processing the neutron analysis data signals to determine the density distribution of a given constituent element of said given substance within different regions of said monitored object and to provide constituent density signals indicating said determined density distribution for said given constituent element within said different regions;

(c) processing said mass density signals provided pursuant to routine (a) for known items having none or a known density distribution of said given constituent element in combination with said constituent density signals provided pursuant to routine (b) for said known items to generate discriminants for said known items;

(d) processing said discriminants to condition a neural network to provide an indication of whether at least said predetermined amount of said given substance probably is present when processing discriminant conditioned mass density signals provided pursuant to routine (a) in combination with discriminant conditioned constituent density signals provided pursuant to routine (b) for said monitored objects in which the density distribution of said given constituent element in said different regions is unknown;

(e) conditioning said mass density signals provided pursuant to routine (a) and said constituent density signals provided pursuant to routine (b) for monitored objects in which the density distribution of said given constituent element in said different regions is unknown in accordance with said discriminants;

(f) processing said discriminant conditioned mass density signals provided pursuant to routines (a) and (e) in combination with discriminant conditioned constituent density signals provided pursuant to routines (b) and (e) for said monitored objects in which the density distribution of said given constituent element in said different regions is unknown in accordance with said neural network to determine whether at least said predetermined amount of said given substance probably is present in said monitored object in which the density distribution of said given constituent element is unknown.

Additional features of the present invention are described in relation to the description of the preferred embodiments.

## BRIEF DESCRIPTION OF THE DRAWING

Figure 1 is a block diagram of a preferred embodiment of a substance detection system according to the present invention.

Figure 2 is a block diagram illustrating a group of data processing routines performed by the data processing system of the substance detection system of the present invention.

## DESCRIPTION OF THE PREFERRED EMBODIMENTS

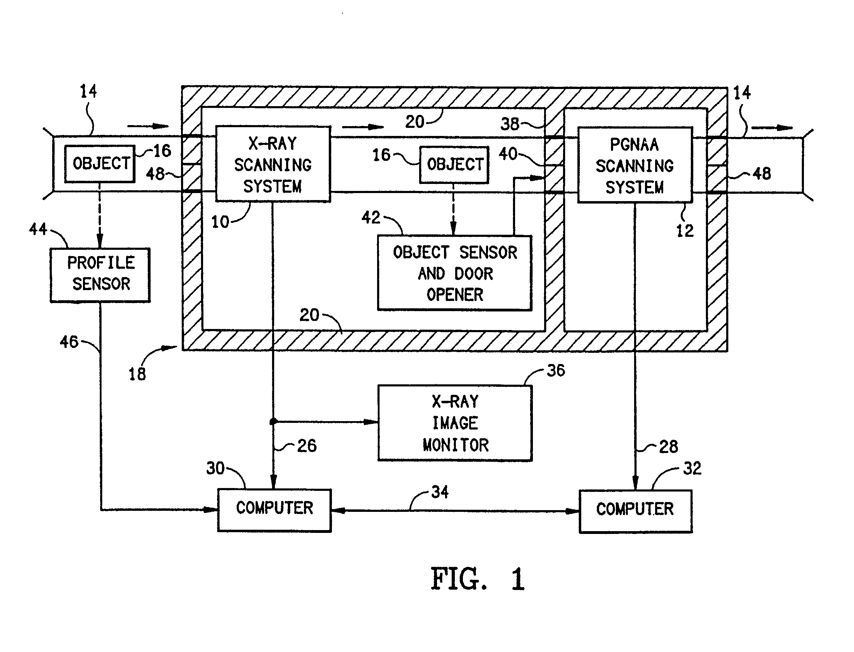

Referring to Figure 1, a preferred embodiment of the system of the present invention includes an X-ray scanning system 10, a PGNAA scanning system 12, and a conveyor 14 for transporting monitored objects 16 through the X-ray scanning system 10 and the PGNAA scanning system 12.

The X-ray scanning system 10 and the PGNAA scanning system 12 are both contained in a common housing 18. The housing 18 has common radiation shielding material 20 positioned for shielding persons and objects outside of the housing 18 from both X-rays and radiation generated by the neutron analysis scanning system 12.

The X-ray scanning system 10 includes an X-ray source and an X-ray detector. The X-ray scanning system 10 is adapted for scanning monitored objects 16 transported therethrough by the conveyor 14 with X-rays and the X-ray detector responds to such scanning by providing X-ray data signals 26. The X-ray scanning system 10 preferably includes a plurality of X-ray sources and detectors for scanning the transported objects 16 with multiple energy X-rays from different scanning angles so that mass density determinations and approximate range-ofatomic-number determinations can be made from the X-ray data signals 26.

The PGNAA scanning system 12 includes a neutron source and a PGNAA detector. The PGNAA scanning system 12 is adapted for scanning monitored objects 16 transported therethrough by the conveyor 14 with neutrons and the PGNAA detector responds to such scanning by providing neutron analysis data signals 28.

The X-ray data signals 26 and the neutron analysis data signals 28 are processed by a a a data processing system that includes a first computer 30 and a second computer 32. The first and second computers 30, 32 process the X-ray data signals 26 for a transported monitored object 16 and the neutron analysis data signals 28 for the transported monitored objects 16 to provide an indication as to whether the transported monitored object 16 contains at least a predetermined amount of a given substance. The first and second computers 30, 32 are interconnected by a data bus 34 to share processed data.

An X-ray image monitor 36 also is coupled to the X-ray scanning system 10 for displaying X-ray images of the monitored objects 16 scanned by the X-ray scanning system 10. A person viewing the X-ray image monitor 36 can make determinations based upon the displayed images as to whether or not the monitored object contains the given substance and thereby override possible false alarms indicated by the computer 30, 32. Based upon such viewing and determinations, the person viewing the X-ray image monitor may also provide additional input data to the second computer 32 for processing.

The X-ray data signals 26 may also be processed by the first computer 30 to determine the dimensions of the transported monitored objects 16.

The conveyor 14 is adapted for transporting the monitored objects 16 through the X-ray scanning system 10 prior to transporting the monitored objects 16 through the PGNAA scanning system 12, since processing of the X-ray data signals 26 by the first computer 30 typically takes longer than the processing of the neutron analysis data signals 28 by the second computer 32. The second computer 32 includes means for adjusting its processing of the neutron analysis signals 28 for a given object 16 in accordance with the X-ray data signals 26 provided by the X-ray scanning system 10 for the given object 16.

Means (not shown) may also be provided for adjusting the PGNAA scanning system 12 when scanning a given object 16 in accordance with the X-ray data signals 26 provided by the X-ray scanning system 10 for the given object 16.

In order to prevent the operation of the X-ray scanning system 10 and the operation of the PGNAA scanning system 12 from interfering with each other, the X-ray scanning system 10 is physically separated from the PGNAA scanning system 12, and at least one wall 38 of shielding material is disposed between the X-ray scanning system 10 and the PGNAA scanning system 12. Multiple walls of shielding material may be disposed on all sides of the PGNAA scanning system 12 for shielding persons and objects outside of the housing 18 from the radiation produced by the PGNAA scanning system 12. Each wall 38 contains a door 40 of shielding material that is openable for permitting monitored objects 16 transported by the conveyor 14 to be transported between the X-ray scanning system 10 and the PGNAA scanning system 12. The door 40 is opened when an object 14 being transported by the conveyer 14 approaches the door 40 so as not to disturb the orientation of the object 16 on the conveyor 14 as the object 16 passes through the door 40. An objection detection and door opener system 42 is disposed for detecting when an object 16 being transported by the conveyor 14 approaches the door 40 and for opening the door 40 in response to detection said approach of the transported object 16. Alternatively, the door 40 is opened and closed at predetermined intervals based upon the speed at which the conveyor 14 transports the monitored objects 16 through the X-ray scanning system 10 and the PGNAA scanning system 12.

The objection detection system of Figure 1 further includes a profile sensor 44 for sensing the profile of an object 16 as the object 16 is being transported by the conveyor 14 through the X-ray scanning system 10 and the PGNAA scanning system 12 and provides object profile signals 46 to the first computer 30 in response thereto as the object 16 is being transported. The dimensions of the object 16 may be determined in response to the object profile signals. The first and second computers 30, 32 correlate the processing of the X-ray data signals 26 and the processing of said neutron analysis data signals 28 in accordance with the object profile signals 46. The object profile signals 46 also are used to control the timing the activation of the X-ray scanning system 10 for scanning the object 16 with X-rays as the object 16 is being transported through the X-ray scanning system 10.

The housing 18 further includes doors 48 of shielding material at each and of the housing 18. The doors 48 also open as objects 16 on the conveyor 14 approach the doors 48 so as not to disturb the orientation of the objects 16 on the conveyor as the objects 16 pass through said doors. The degree to which the doors 48, as well as the doors 40 in the wall 38, are opened in controlled in response to the object profile signals 46. Alternatively, the degree to which the doors 48, as well as the doors 40 in the wall 38, are opened in controlled in accordance with the object dimensions determined by the first computer 30 in response to the X-ray data signals.

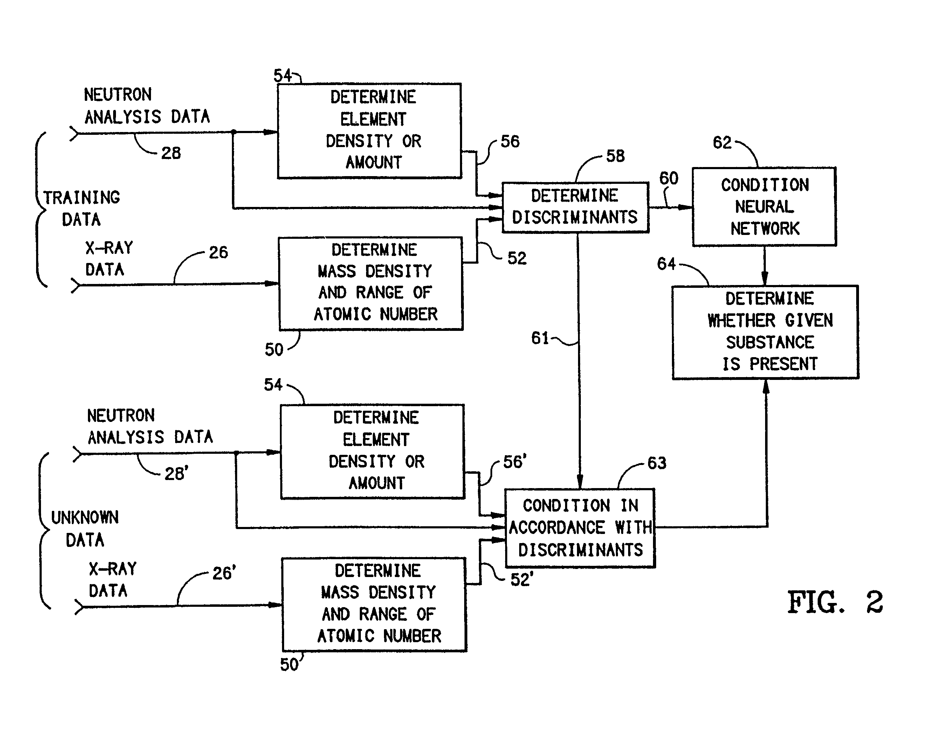

The processing of the X-ray data signals 26 and the neutron analysis data signals 28 by the first and second computers 30, 32 is further described with reference to Figure 2.

The first computer 30 performs a first data processing routine 50 of processing the X-ray data signals 26 to determine a mass density distribution within different regions of the monitored object 16 and to provide mass density signals 52 indicating said determined mass density distribution within said different regions. Alternatively, the routine 50 further includes subroutines of further processing the X-ray data signals 26 to also determine the atomic number range of the monitored object within said different regions and/or the dimensions of the monitored object and to provide mass density signals 52 that also indicate said determined atomic number range of the monitored object within said different regions and/or the dimensions of the monitored object.

The second computer 32 performs a second data processing routine 54 of processing the neutron analysis data signals 28 to determine the density distribution of a given constituent element, such as Nitrogen, of said given substance, such as an explosive, within different regions of said monitored object 16 and to provide constituent density signals 56 indicating said determined density distribution for said given constituent element within said different regions.

The second computer 32 also performs a third data processing routine 58 of processing mass density signals 52 and constituent density signals 56 derived from training data produced by scanning known items to generate discriminants 60, 61. The routine 58 processes said mass density signals 52 provided pursuant to routine 50 for known items having none or a known density distribution of said given constituent element in combination with said constituent density signals 56 provided pursuant to routine 54 for said known items to generate discriminants 60, 61 for said known items. Alternatively, the routine 58 also processes said neutron analysis data signals 28 for known items having none or a known density distribution of said given constituent element in addition to said mass density signals 52 for said known items and said constituent density signals 56 for said known items to generate said discriminants 60, 61 for said known items. In another alternative embodiment, the neutron analysis data signals 28, for said known items, but not the constituent density signals 56 for said known items, are processed by the routine 58 in combination with the mass density signals 52 to generate said discriminants 60, 61.

The second computer 32 further performs a fourth data processing routine 62 of processing said discriminants 60 to condition (train) a neural network to provide an indication of whether at least said predetermined amount of said given substance probably is present when processing mass density signals 52' provided pursuant to routine 50 that are subsequently discriminant conditioned in combination with constituent density signals 56' provided pursuant to routine 54 that are subsequently discriminant conditioned for monitored objects in which the density distribution of said given constituent element in said different regions is unknown.

Upon processing unknown data including X-ray data signals 26' and neutron analysis data signals 28' produced from scanning monitored objects in which the density distribution of said given constituent element in said different regions is unknown, the second computer 32 performs a fifth data processing routine 63 of conditioning said mass density signals 52'and said constituent density signals 56'for said monitored objects in which the density distribution of said given constituent element in said different regions is unknown in accordance with the discriminants 61. The discriminants 61 define functions by which the mass density signals 52' and the constituent density signals 56' are conditioned for processing in accordance with the neural network to provide an indication of whether at least said predetermined amount of said given substance probably is present. In alternative embodiments, the neutron analysis data signals 28'for said unknown item are likewise conditioned by said discriminants 61.

Finally, the computer 32 performs a sixth data processing routine 64 of processing said discriminant conditioned mass density signals provided pursuant to routines 50 and 63 in combination with discriminant conditioned constituent density signals provided pursuant to routines 54 and 63 for said monitored objects in which the density distribution of said given constituent element in said different regions is unknown in accordance with said neural network to determine whether at least said predetermined amount of said given substance probably is present in said monitored object in which the density distribution of said given constituent element is unknown.

To reduce the probability of providing a false indication during routine 64, it is preferable to also perform PGNAA scanning and resultant processing of the responsive neutron analysis signals 28 for an element, such as Boron, Chlorine, Hydrogen, Aluminum, Carbon or Iron, other the given constituent element, such as Nitrogen, the presence of which may modify the quantitative indication of the amount of the given constituent element (Nitrogen) provided by the neutron analysis signals 28.

Accordingly, the computer 32 also performs the second routine 54 to process neutron analysis data signals 28 produced by scanning monitored objects containing known items having a known amount and distribution of such a modifier element to determine the density distribution of the modifier element within different regions of said monitored object 16 and to provide modifier element signals indicating the amount of or said determined density distribution of said other element within said different regions. These modifier signals are processed by routine 58 together with the signals 52, 56 (and alternatively 52) provided for items containing none or a known amount of the given constituent element during the training phase in order to provide the discriminants 60, 61; and during the detection phase, such modifier signals are also produced by processing the neutron analysis data signals 26' for monitored objects in which the density distribution of said given constituent element in said different regions is unknown pursuant to routine 50, and such modifier signals likewise are conditioned in accordance with the discriminants 61 pursuant to routine 63.

It also is preferred that the first routine 50 include a subroutine of processing said X-ray data signals 26 to determine the boundaries of individual items within said monitored object 16 to provide boundary indication signals indicating said determined boundaries; and that the third routine 58, the fifth routine 63 and the fourth routine 64 include subroutines of also processing said boundary indication signals in combination with said mass density signals 26.

The third routine 58, the fifth routine 63 and the fourth routine 64 may include subroutines of processing said object dimension determinations by the first computer 30 together with the other signals processed by these routines.

## Claims

1.  A system for detecting the presence of a given substance within a monitored object, comprising an X-ray scanning system (10); a neutron analysis scanning system (12); means (14) for transporting a monitored object (16) through the X-ray scanning system and the neutron analysis scanning system;

    wherein the X-ray scanning system is adapted for scanning said transported monitored object with X-rays and for providing X-ray data signals (26) in response to said X-ray scanning of said transported monitored object;

    wherein the neutron analysis scanning system is adapted for scanning said transported monitored object with neutrons and for providing neutron analysis data signals (28) in response to said neutron analysis scanning of said transported monitored object;

    a data processing system (30, 32) for processing the X-ray data signals for said transported monitored object and/or the neutron analysis data signals for said transported monitored object to provide an indication as to whether said transported monitored object contains at least a predetermined amount of a given substance; and

    a common housing (18) for both the X-ray scanning system and the neutron analysis scanning system, with the housing having common radiation shielding material (20) positioned for shielding persons and objects outside of the housing from both X-rays and radiation generated by the neutron analysis scanning system.

2.  A system according to Claim 1, wherein the transporting means (14) are adapted for transporting said monitored object (16) through the X-ray scanning system (10) prior to transporting said monitored object through the neutron analysis scanning system (12).

3.  A system according to Claim 2, wherein the data processing system (30, 32) includes means for adjusting the processing of the neutron analysis signals (28) in accordance with said X-ray data signals (26) provided by the X-ray scanning system (10) for said given object.

4.  A system according to Claim 2, further comprising means for adjusting the TNA scanning system (12) when scanning a given object in accordance with said X-ray data signals (26) provided by the X-ray scanning system (10) for said given object.

5.  A system according to Claim 1, comprising a wall (38) of shielding material between the X-ray scanning system (10) and the neutron analysis scanning system (12) for shielding the X-ray scanning system from the neutron analysis scanning system during said scanning;

    wherein the wall contains a door (40) that is openable for permitting objects transported by the transporting means to be transported between the X-ray scanning system and the neutron analysis scanning system; and

means (42) for opening the door when a said object being transported by the transporting means approaches the door.

6. A system according to Claim 5, further comprising

means (44) for sensing a profile of said object as said object is being transported by said transporting means and for providing object profile signals (46) in response thereto as said object is being transported; and

means for controlling the degree to which the door is opened in accordance with said object profile signals.

7. A system according to Claim 1, comprising a wall (38) of shielding material between the X-ray scanning system (10) and the neutron analysis scanning system (12) for shielding the X-ray scanning system from the neutron analysis scanning system during said scanning;

wherein the wall contains a door (40) that is openable for permitting objects transported by the transporting means to be transported between the X-ray scanning system and the neutron analysis scanning system;

means (42) for detecting when a said object being transported by the transporting means approaches the door; and

means (42) for opening the door in response to detection said approach of said transported object.

8. A system according to Claim 1, further comprising

means (44) for sensing a profile of said object as said object is being transported by said transporting means and for providing object profile signals (46) in response thereto as said object is being transported; and

means (30, 32) for correlating the processing of said X-ray data signals (26) and the processing of said neutron analysis data signals (28) in accordance with said object profile signals.

9. A system according to Claim 1, further comprising

means (44) for sensing a profile of said object as said object is being transported by said transporting means and for providing object profile signals (46) in response thereto as said object is being transported; and

means for timing the activation of the X-ray scanning means in accordance with said object profile signals.

10. A system according to Claim 1, wherein the data processor (30, 32) is adapted for performing the following data processing routines:

(a) processing (50) the X-ray data signals (26) to determine a mass density distribution within different regions of said monitored object and to provide mass density signals (52, 52') indicating said determined mass density distribution within said different regions;

(b) processing (54) the neutron analysis data signals (28) to determine the density distribution of a given constituent element of said given substance within different regions of said monitored object and to provide constituent density signals (56, 56') indicating said determined density distribution for said given constituent element within said different regions;

(c) processing (58) said mass density signals (52) provided pursuant to routine (a) for known items having none or a known density distribution of said given constituent element in combination with said constituent density signals (56) provided pursuant to routine (b) for said known items to generate discriminants (60, 61) for said known items;

(d) processing (62) said discriminants (60) to condition a neural network to provide an indication of whether at least said predetermined amount of said given substance probably is present when processing discriminant conditioned mass density signals provided pursuant to routine (a) in combination with discriminant conditioned constituent density signals provided pursuant to routine (b) for said monitored objects in which the density distribution of said given constituent element in said different regions is unknown;

(e) conditioning (63) said mass density signals (52') provided pursuant to routine (a) and said constituent density signals (56') provided pursuant to routine (b) for monitored objects in which the density distribution of said given constituent element in said different regions is unknown in accordance with said discriminants (61);

(f) processing (64) said discriminant conditioned mass density signals provided pursuant to routines (a) and (e) in combination with discriminant conditioned constituent density signals provided pursuant to routines (b) and (e) for said monitored objects in which the density distribution of said given constituent element in said different regions is unknown in accordance with said neural network to determine whether at least said predetermined amount of said given substance probably is present in said monitored object in which the density distribution of said given constituent element is unknown.

11. A system for detecting the presence of a given substance within a monitored object, comprising

an X-ray scanning system (10) for scanning a monitored object (16) with X-rays and for providing X-ray data signals (26) in response to said X-ray scanning of said monitored object;

a neutron analysis scanning system (12) for scanning said monitored object with neutrons and for providing neutron analysis data signals (28) in response to said neutron analysis scanning of said monitored object; and

a data processing system (30, 32) for processing the X-ray data signals for said monitored object and the neutron analysis data signals for said monitored object to provide an indication as to whether said monitored object contains at least a predetermined amount of a given substance, wherein the data processor is adapted for performing the following data processing routines:

(a) processing (50) the X-ray data signals to determine a mass density distribution within different regions of said monitored object and to provide mass density signals (52, 52') indicating said determined mass density distribution within said different regions;

(b) processing (54) the neutron analysis data signals to determine the density distribution of a given constituent element of said given substance within different regions of said monitored object and to provide constituent density signals (56, 56') indicating said determined density distribution for said given constituent element within said different regions;

(c) processing (58) said mass density signals (52) provided pursuant to routine (a) for known items having none or a known density distribution of said given constituent element in combination with said constituent density signals (56) provided pursuant to routine (b) for said known items to generate discriminants (60, 61) for said known items;

(d) processing (62) said discriminants (60) to condition a neural network to provide an indication of whether at least said predetermined amount of said given substance probably is present when processing discriminant conditioned mass density signals provided pursuant to routine (a) in combination with discriminant conditioned constituent density signals provided pursuant to routine (b) for said monitored objects in which the density distribution of said given constituent element in said different regions is unknown;

(e) conditioning (63) said mass density signals (52') provided pursuant to routine (a) and said constituent density signals (56') provided pursuant to routine (b) for monitored objects in which the density distribution of said given constituent element in said different regions is unknown in accordance with said discriminants (61);

(f) processing (64) said discriminant conditioned mass density signals provided pursuant to routines (a) and (e) in combination with discriminant conditioned constituent density signals provided pursuant to routines (b) and (e) for said monitored objects in which the density distribution of said given constituent element in said different regions is unknown in accordance with said neural network to determine whether at least said predetermined amount of said given substance probably is present in said monitored object in which the density distribution of said given constituent element is unknown.

12. A system according to Claim 11, further comprising the routine of

(g) processing (54) the neutron analysis data signals (28) to determine the amount of or the density distribution in the monitored object of an element other the given constituent element, the presence of which other element may modify a quantitative indication of the amount of the given constituent element provided by the neutron analysis signals within different regions of said monitored object, and to provide modifier element signals (56) indicating the amount of or said determined density distribution of said other element within said different regions;

wherein routine (c) comprises the routine of

(h) processing (58) said mass density signals (52) provided pursuant to routine (a) for known items having none or a known density distribution of said given constituent element and having none or a known amount or density distribution of said other element in combination with said constituent density signals (56) provided pursuant to routine (b) and modifier element signals (56) provided pursuant to routine (g) for said known items to generate discriminants (60, 61) for said known items;

wherein routine (d) comprises the routine of

(i) processing (62) said discriminants (60) to condition a neural network to provide an indication of whether at least said predetermined amount of said given substance probably is present when processing discriminant conditioned mass density signals provided pursuant to routine (a) in combination with discriminant conditioned constituent density signals provided pursuant to routine (b) and discriminant conditioned modifier element signals provided pursuant to routine (f) for said monitored objects in which the density distribution of said given constituent element in said different regions is unknown;

wherein routine (e) comprises the routine of

(j) conditioning (63) said mass density signals (52') provided pursuant to routine (a), said constituent density signals (56') provided pursuant to routine (b) and modifier element signals (56') provided pursuant to routine (f) for monitored objects in which the density distribution of said given constituent element in said different regions is unknown in accordance with said discriminants; and

wherein routine (f) comprises the routine of

(k) processing (64) said discriminant conditioned mass density signals provided pursuant to routines (a) and (j) in combination with discriminant conditioned constituent density signals provided pursuant to routines (b) and (j) and discriminant conditioned modifier element signals provided pursuant to routines (f) and (j) for said monitored objects in which the density distribution of said given constituent element in said different regions is unknown in accordance with said neural network to determine whether at least said predetermined amount of said given substance probably is present in said monitored object in which the density distribution of said given constituent element is unknown.

13. A system according to Claim 11 or 12, wherein said X-ray scanning system (10) is adapted for scanning said objects with multiple energy X-rays; and

wherein routine (a) comprises the routine of

(l) processing (50) X-ray data signals (26) determine an atomic number range and a mass density distribution within different regions of said monitored object and to provide mass density signals (52, 52') indicating said atomic number range and said determined mass density distribution within said different regions.

14. A system according to Claim 11, wherein routine (c) comprises the routine of

(g) processing (58) said mass density signals

(52) provided pursuant to routine (a) for known items having none or a known density distribution of said given constituent element in combination with said constituent density signals (56) provided pursuant to routine (b) and said neutron analysis signals (28) for said known items to generate said discriminants (60, 61) for said known items.

15. A system according to Claim 11, wherein routine (a) comprises the routine of

(g) processing (50) the X-ray data signals (26) to determine the dimensions and a mass density distribution within different regions of said monitorad object and to provide mass density signals (54, 54')indicating said dimensions and said determined mass density distribution within said different regions.

16. A system according to Claim 11, wherein routine (a) includes a subroutine of processing said X-ray data signals to determine the boundaries of individual items within said monitored object to provide boundary indication signals indicating said determined boundaries; and

wherein routines (c) and (e) include subroutines of also processing said boundary indication signals in combination with said mass density signals.

17. A system according to Claim 1, 10 or 11, wherein the neutron analysis scanning system (12) is a prompt gamma neutron activation analysis (PGNAA) scanning system.

FIG. 1

FIG. 2

NEUTRON ANALYSIS DATA — 28

DETERMINE ELEMENT DENSITY OR AMOUNT — 54

TRAINING DATA

X-RAY DATA — 26

DETERMINE MASS DENSITY AND RANGE OF ATOMIC NUMBER — 50

56

52

DETERMINE DISCRIMINANTS — 58

60

CONDITION NEURAL NETWORK — 62

DETERMINE WHETHER GIVEN SUBSTANCE IS PRESENT — 64

61

NEUTRON ANALYSIS DATA — 28'

DETERMINE ELEMENT DENSITY OR AMOUNT — 54

UNKNOWN DATA

X-RAY DATA — 26'

DETERMINE MASS DENSITY AND RANGE OF ATOMIC NUMBER — 50

56'

52'

CONDITION IN ACCORDANCE WITH DISCRIMINANTS — 63

**European Patent Office**

# EUROPEAN SEARCH REPORT

Application Number

EP 91 30 4246

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 336 634 (COGENT LTD.) * abstract; column 4, line 45 - column 6, line 11; claims 1,7 * | 11 | G 01 V 5/00 G 01 N 23/083 |
| A | | 1,2,17 | |
| P,A | FR-A-2 641 867 (C.E.A.) * claim 1; abstract * | 1,11,17 | |
| A,D | EP-A-0 295 429 (SCIENCE APPLICATIONS INT. CORP.) * abstract * | 1,11 | |
| A,D | US-A-3 832 545 (J. BARTKO) * abstract * | 1,11 | |

TECHNICAL FIELDS SEARCHED (Int. Cl.5)

G 01 V
G 01 N

The present search report has been drawn up for all claims

| Place of search | Date of completion of the search | Examiner |
|---|---|---|
| BERLIN | 10-09-1991 | BRISON O.P. |